# EUROPEAN PATENT SPECIFICATION

(11) **EP 3 492 882 B1**
(45) Date of publication and mention of the grant of the patent: **08.03.2023**
(21) Application number: 18209733.7
(22) Date of filing: 03.12.2018
(51) Int. Cl.: G01F 23/292

(54) **LIQUID LEVEL DETECTION SENSOR AND SPECIMEN TESTING APPARATUS**
FLÜSSIGKEITSSTANDDETEKTIONSSENSOR UND PROBENTESTVORRICHTUNG
CAPTEUR DE DÉTECTION DE NIVEAU DE LIQUIDE ET APPAREIL DE TEST D'ÉCHANTILLON

(30) Priority: 04.12.2017 JP 2017232385
(43) Date of publication of application: 05.06.2019
(73) Proprietor: Nihon Kohden Corporation, Tokyo 161-8560 (JP)
(72) Inventor: MASUDA, Koji, Tokorozawa-shi, Saitama, (JP); TANAZAWA, Masahiro, Tokorozawa-shi, Saitama, (JP); SAEKI, Kazunari, Tokorozawa-shi, Saitama, (JP)
(74) Representative: Grünecker Patent- und Rechtsanwälte PartG mbB

(56) References cited:
- WO-A1-96/23208
- JP-A- H08 304 149
- JP-A- 2006 010 597
- JP-A- 2007 086 036
- JP-A- 2017 532 535
- US-A1- 2012 242 993

## Description

### BACKGROUND

The present invention relates to a specimen testing apparatus for testing a specimen such as blood, and a liquid level detection sensor for detecting the level of the specimen.

In a blood cell counter which is one kind of specimen testing apparatus, the component of blood cells corresponding to the volume of a liquid which is in a long flow path, and which is between two liquid level detection sensors that are separated from each other by an interval along the flow path is measured by a sensing section. The level detection accuracies of the liquid level detection sensors largely influence the accuracy of measurement of the component of blood cells.

An example of a liquid level detection sensor is a liquid sensor for a tube which is disclosed in Figs. 3 and 4 of Japanese Patent No. 3,741,509. In the liquid sensor for a tube, a light emitting element and a light detecting element are placed across a tube functioning as a flow path, and a slit for light irradiation is disposed between the light emitting element and the tube, and at a position which is deviated from the center of the tube.

In the liquid sensor for a tube, the side surface of the tube is irradiated with a light beam which passes through the slit. When a liquid is in the tube, the light detecting element receives the light beam, and, when a liquid is not in the tube, the light detecting element does not receive the light beam.

The liquid sensor for a tube detects the existence/non-existence of the liquid depending on whether a light detecting element receives the light beam or not.

In the liquid sensor for a tube disclosed in Japanese Patent No. 3,741,509, the light emitting element and the light detecting element are placed across the tube. In the case of such a placement, the sensitivity of detection of the liquid level is high, and the assembly errors among the tube, the light emitting element, the slit, and the light detecting element largely affect the sensitivity of detection of the liquid level.

When the detection sensitivity is high, moreover, the detection is easily affected by a bubble or meniscus in the tube. Therefore, a bubble or meniscus may cause erroneous detection of the existence/non-existence of the liquid level. In order to prevent the accuracy of detection of the liquid level from being lowered, furthermore, all of the tube, the light emitting element, the slit, and the light detecting element must be accurately positioned. Therefore, the assembly work is difficult to do, and the productivity is lowered. International Application published under the Patent Cooperation Treaty under the reference WO 96/23208 discloses an optical liquid sensor for a tube that belongs to the prior art.

The present invention has been conducted in order solve the matter in the prior art, and provides a specimen testing apparatus and liquid level detection sensor in which the robustness against the assembly errors among components such as a flow path, a light emitting element, and a light detecting element is improved, which are hardly affected by a bubble or meniscus in the flow path, which are easily assembled, and which have a high productivity.

### SUMMARY

A liquid level detection sensor according to the claimed invention is disclosed in claim 1. Further preferential embodiments of the claimed invention are disclosed according to claims 2-9.

According to the specimen testing apparatus and liquid level detection sensor of the present invention, the robustness against the assembly errors among components such as the light emitter, the flow path, and the light detector is improved. Therefore, the assembly is facilitated, and the productivity in mass production is improved. Moreover, the apparatus is hardly affected by a bubble or meniscus in the flow path, and the accuracy of detection of the liquid level is improved.

### BRIEF DESCRIPTION OF DRAWINGS

Fig. 1 is a perspective view of a specimen testing apparatus of an embodiment, as seen from the side of a flow path.
Fig. 2 is a perspective view of the specimen testing apparatus of the embodiment, as seen from the side of a board.
Fig. 3 is a sectional view of a light path member of the specimen testing apparatus of the embodiment.
Figs. 4A and 4B are operation diagrams of a liquid level detection sensor of the specimen testing apparatus of the embodiment, in the case where there is no liquid in the flow path.
Figs. 5A and 5B are operation diagrams of the liquid level detection sensor of the specimen testing apparatus of the embodiment, in the case where there is a liquid in the flow path.
Figs. 6A and 6B are diagrams of improvements of the robustnesses of the specimen testing apparatus and liquid level detection sensor of the embodiment.

### DETAILED DESCRIPTION OF EMBODIMENTS

Hereinafter, an embodiment of the specimen testing apparatus and liquid level detection sensor of the present invention will be described with reference to drawings.

### [Configuration of specimen testing apparatus]

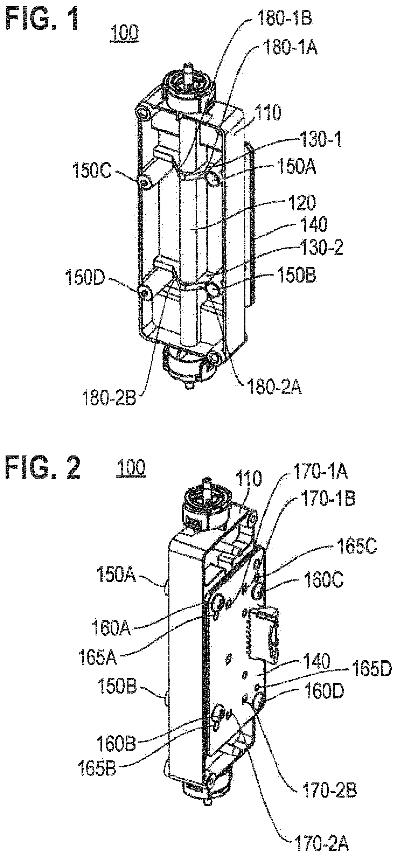

Fig. 1 is a perspective view of a specimen testing apparatus of the embodiment, as seen from the side of a flow path, and Fig. 2 is a perspective view of the specimen testing apparatus of the embodiment, as seen from the side of a board.

As illustrated in Fig. 1, the specimen testing apparatus 100 may include a housing 110. The housing 110 may include the flow path 120 through which a liquid such as blood that is a specimen is to pass, in the middle portion. The flow path 120 is a cylindrically tubular member which extends in the vertical direction of the figure. Although, in the embodiment, the flow path 120 has a cylindrical shape, the flow path 120 is not limited to have a cylindrical shape, and may have a tubular shape having another sectional shape such as a rectangle or a polygon.

The housing 110 may further include light path members 130-1, 130-2 which intersect with the flow path 120. The light path members 130-1, 130-2 are disposed at an interval in the longitudinal direction of the flow path 120.

The flow path 120 and the light path members 130-1, 130-2 are integrally formed in the molding of the housing 110. The light path members 130-1, 130-2 must allow the light beam to be transmitted therethrough or reflected therefrom without causing light attenuation. As the material of the housing 110, therefore, a resin, a plastic, glass, or the like which is high in both transmittance and refractive index at the wavelength of a light source used in the sensor of the present invention.

The housing 110 may include attachment holes 150A, 150B, 150C, 150D for attaching the board 140 illustrated in Fig. 2, to the housing 110. The board 140 is attached to the housing 110 by screws 160A, 160B, 160C, 160D through the attachment holes 150A, 150B, 150C, 150D.

The board 140 may include a light emitter 170-1A and a detecting portion 170-1B at respective positions which oppose the light path member 130-1, and further include a light emitter 170-2A and a light detector 170-2B at respective positions which oppose the light path member 130-2. As described above, the light emitters 170-1A, 170-2A and the light detectors 170-1B, 170-2B are placed on the same board 140. Therefore, the positional errors among the light emitters 170-1A, 170-2A and the light detectors 170-1B, 170-2B depend on errors in design and production of the board 140. The errors in design and production are so minute that they are negligible, and therefore irrelevant to the assembly error. In the embodiment, light emitting diodes (LEDs) are used as the light emitters 170-1A, 170-2A. Light beams emitted from LEDs vary in degree of directionality. In the LEDs used in the embodiment, it is not required to place emphasis on the degree of directionality. When the amounts of the light beams entering the light path members 130-1, 130-2 are increased, also the amounts of the light beams which are received by the light detectors 170-1B, 170-2B are increased, and the sensitivities of detection of the light beams are improved. Therefore, highly directional light sources such as bullet-shaped LEDs are used more preferably. Alternatively, laser diodes (LDs) may be used as the light emitters 170-1A, 170-2A. In the embodiment, photodiodes are used as the light detectors 170-1B, 170-2B. Alternatively, other semiconductor elements such as phototransistors or photoconductors may be used as the light detectors 170-1B, 170-2B.

The light emitter 170-1A emits a light beam toward the light path member 130-1, and the light emitter 170-2A emits a light beam toward the light path member 130-2. The light detector 170-1B receives the light beam from the light path member 130-1, and the light detector 170-2B receives the light beam from the light path member 130-2. In the configuration where the two light path members 130-1, 130-2 are disposed at an interval in the longitudinal direction of the flow path 120 as described above, the liquid level can be detected at two places of the flow path 120.

The light path member 130-1 includes a first surface 180-1A which reflects the light beam emitted from the light emitter 170-1A, and a second surface 180-1B which reflects the light beam that is reflected by the first surface 180-1A, and transmitted through the flow path 120. The light path member 130-2 may include a first surface 180-2A which reflects the light beam emitted from the light emitter 170-2A, and a second surface 180-2B which reflects the light beam that is reflected by the first surface 180-2A, and transmitted through the flow path 120. The inclination angles of the first surfaces 180-1A, 180-2A are set to angles at which the light beams emitted from the light emitters 170-1A, 170-2A, and those transmitted through the flow path 120 are totally reflected.

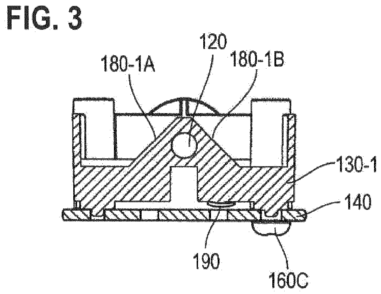

Fig. 3 is a sectional view of the light path member 130-1 of the specimen testing apparatus 100 of the embodiment. The light path member 130-1 has the first surface 180-1A and the second surface 180-1B. The flow path 120 through which a liquid such as blood is to pass is disposed between the first surface 180-1A and the second surface 180-1B. The first surface 180-1A and the second surface 180-1B are disposed so as to oppose each other across the flow path 120. The first surface 180-1A, the flow path 120, and the second surface 180-1B are integrally formed. Therefore, the positional errors among the first surface 180-1A, the flow path 120, and the second surface 180-1B depend on errors in design and production of the light path member 130-1. The errors in design and production are so minute that they are negligible, and therefore irrelevant to the assembly errors.

The first surface 180-1A reflects the light beam emitted from the light emitter 170-1A illustrated in Fig. 2. The flow path 120 allows the liquid to pass through a light path of the light beam which is reflected by the first surface 180-1A. The second surface 180-1B reflects the light beam transmitted through the flow path 120, toward the light detector 170-1B illustrated in Fig. 2.

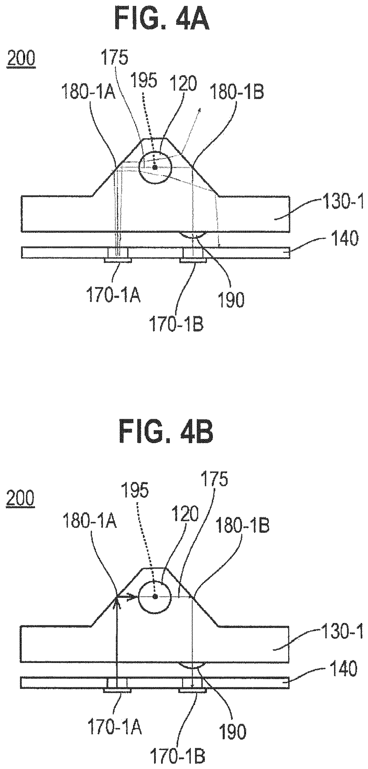

The light path member 130-1 includes a condensing lens 190 which condenses the light beam reflected by the second surface 180-1B onto the light detector 170-1B (see Fig. 4A), between the second surface 180-1B and the light detector 170-1B illustrated in Fig. 2. Because the condensing lens 190 is disposed, the sensitivity of detection of the light beam is improved. The condensing lens 190 is formed integrally on the light path member 130-1 in which the first surface 180-1A, the flow path 120, and the second surface 180-1B are formed. Therefore, also the positional error between the second surface 180-1B and the condensing lens 190 depends on errors in design and production.

Although, in the above, the configuration of the light path member 130-1 has been described, also the configuration of the light path member 130-2 is identical with that of the light path member 130-1.

### [Operation of specimen testing apparatus]

Next, the operation of the specimen testing apparatus 100 of the embodiment will be described with reference to Figs. 1 to 5B.

The specimen testing apparatus 100 is used for measuring the component of blood cells corresponding to the volume of the liquid which is in the flow path 120, and which exists between the light path members 130-1, 130-2. In order to perform the measurement, the level of the liquid is detected by the light detector 170-2B (see Fig. 2) which is disposed with respect to the light path member 130-2, and then that of the liquid is detected by the light detector 170-1B (see Fig. 2) which is disposed with respect to the light path member 130-1.

Figs. 4A and 4B are operation diagrams of the liquid level detection sensor of the specimen testing apparatus 100 of the embodiment, in the case where there is no liquid in the flow path. The liquid level detection sensor 200 of the specimen testing apparatus 100 may be configured by the light emitter 170-1A, the first surface 180-1A of the light path member 130-1, the second surface 180-1B of the light path member 130-1, and the light detector 170-1B.

As illustrated in Fig. 4A, the light emitter 170-1A emits a light beam toward the first surface 180-1A of the light path member 130-1. On the first surface 180-1A, the emitted light beam is reflected at a reflection angle corresponding to the incident angle with respect to the first surface 180-1A.

As illustrated in Figs. 1, 3, and 4A, the flow path 120 is a cylindrically tubular member which extends while intersecting with the light path of the light beam that is reflected by the first surface 180-1A. The center axis 195 of the flow path 120 contacts with the optical axis 175 of the light beam which is reflected by the first surface 180-1A, or is located in the vicinity of the optical axis 175. Even when the position of the flow path 120 has errors in design and production, therefore, the errors are negligible, and do not affect the accuracy of detection of the liquid level.

When there is no liquid in the flow path 120, as illustrated in Fig. 4A, the light beam which is reflected by the first surface 180-1A is diffused by the surface of the flow path 120. The light beam which is transmitted through and diffused by the flow path 120 is reflected or refracted by the second surface 180-1B. The reflected light beam is received by the light detector 170-1B through the condensing lens 190, and the light beam which is refracted by the second surface 180-1B is emitted from the light path member 130-1.

The light beam which is reflected by the second surface 180-1B contains light components which is diffused by the surface of the flow path 120. As illustrated in Fig. 4A, therefore, a large amount of the light components does not reach the condensing lens 190. When there is no liquid, consequently, only a very small part of the light beam which is emitted from the light emitter 170-1A is received by the light detector 170-1B as illustrated in Fig. 4B. When there is no liquid in the flow path 120, as a result, the amount of light received by the light detector 170-1B is largely decreased.

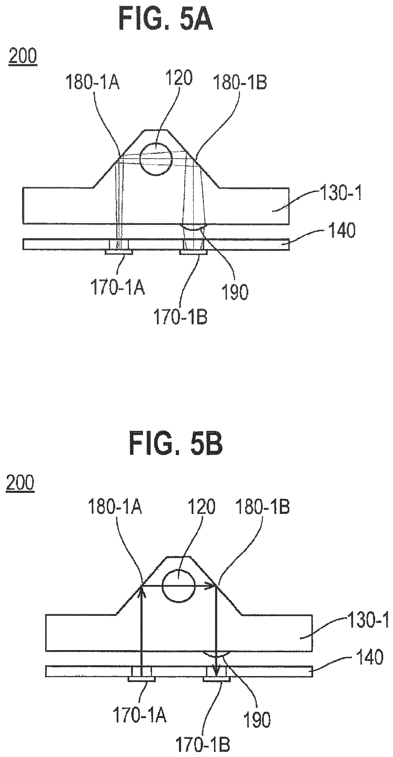

Figs. 5A and 5B are operation diagrams of the liquid level detection sensor 200 of the specimen testing apparatus 100 of the embodiment, in the case where there is the liquid in the flow path.

As illustrated in Fig. 5A, the light emitter 170-1A emits a light beam toward the first surface 180-1A of the light path member 130-1. On the first surface 180-1A, the emitted light beam is reflected at a reflection angle corresponding to the incident angle with respect to the first surface 180-1A.

When there is the liquid in the flow path 120, as illustrated in Fig. 5A, the light beam which is reflected by the first surface 180-1A is transmitted through the flow path 120 without being substantially diffused by the surface of the flow path as illustrated. The light beam which is transmitted through the flow path 120 is reflected by the second surface 180-1B, and then received by the light detector 170-1B through the condensing lens 190.

As illustrated in Fig. 5A, most of the light beam which is reflected by the second surface 180-1B reaches the condensing lens 190. As illustrated in Fig. 5B, therefore, substantially all of the light light beam which is emitted from the light emitter 170-1A is received by the light detector 170-1B. When there is the liquid in the flow path 120, therefore, the amount of light received by the light detector 170-1B is increased.

In the specimen testing apparatus 100 of the embodiment, as described above, the liquid level is detected by using the phenomenon that, when there is no liquid in the flow path 120, the amount of light received by the light detector 170-1B is decreased, and, when there is the liquid in the flow path 120, the amount of light received by the light detector 170-1B is increased. When the liquid level is detected depending on the amount of received light as described above, the robustness against the assembly errors among components such as the light emitter 170-1A, the flow path 120, and the light detector 170-1B is improved. Therefore, the specimen testing apparatus 100 is easily assembled, and the productivity in mass production is improved. Moreover, the apparatus is hardly affected by a bubble or meniscus in the flow path 120, and the accuracy of detection of the liquid level is improved.

Although, in the above, the operation of the liquid level detection sensor 200 of the specimen testing apparatus 100 in the case where the light path member 130-1 is used has been described, the operation in the case where the light path member 130-2 is used is performed in the same manner.

### {Configuration of liquid level detection sensor]

Next, the configuration of the liquid level detection sensor 200 of the embodiment will be described. As illustrated in Figs. 4A to 5B, the liquid level detection sensor of the embodiment is configured by the light emitter 170-1A, the first surface 180-1A, the second surface 180-1B, and the light detector 170-1B.

The light emitter 170-1A emits a light beam toward the light path member 130-1. The first surface 180-1A formed in the light path member 130-1 reflects the light beam emitted from the light emitter 170-1A. The second surface 180-1B formed in the light path member 130-1 reflects the light beam which is reflected by the first surface 180-1A, and which is transmitted through the flow path 120 that allows the liquid to pass therethrough. The light detector 170-1B receives the light beam reflected by the second surface 180-1B.

The light emitter 170-1A and the light detector 170-1B are placed on the same board 140. Therefore, the positional error between the light emitter 170-1A and the light detector 170-1B depends on the errors in design and production of the board 140. The errors in design and production are so minute that they are negligible, and therefore irrelevant to the assembly error.

The first surface 180-1A and the second surface 180-1B are formed integrally in the light path member 130-1. Therefore, the positional error between the first surface 180-1A and the second surface 180-1B depends on the errors in design and production of the light path member 130-1. The errors in design and production are so minute that they are negligible, and therefore irrelevant to the assembly error.

The light path member 130-1 may include the condensing lens 190 which condenses the light beam reflected by the second surface 180-1B onto the light detector 170-1B, between the second surface 180-1B and the light detector 170-1B. When the condensing lens 190 is disposed, the sensitivity of detection of the light beam is improved. The condensing lens 190 is formed integrally on the light path member 130-1 in which the first surface 180-1A, the flow path 120, and the second surface 180-1B are formed. Therefore, also the positional error between the second surface 180-1B and the condensing lens 190 depends on the errors in design and production.

The first surface 180-1A and the second surface 180-1B are disposed so as to oppose each other across the flow path 120.

According to the thus configured liquid level detection sensor 200 of the embodiment, the robustness against the assembly errors among components such as the light emitter 170-1A, the flow path 120, and the light detector 170-1B is improved. Therefore, the liquid level detection sensor 200 is easily assembled, and the productivity in mass production is improved. Moreover, the apparatus is hardly affected by a bubble or meniscus in the flow path, and the accuracy of detection of the liquid level is improved. The components of the liquid level detection sensor 200 of the embodiment are identical with those of the above-described specimen testing apparatus 100.

### [Operation of liquid level detection sensor]

Next, the operation of the liquid level detection sensor 200 of the embodiment will be described. The operation of the liquid level detection sensor 200 is identical with that of the liquid level detection sensor 200 which has been described with reference to Figs. 4A to 5B, and which is disposed in the specimen testing apparatus 100.

### [Improvement of robustness]

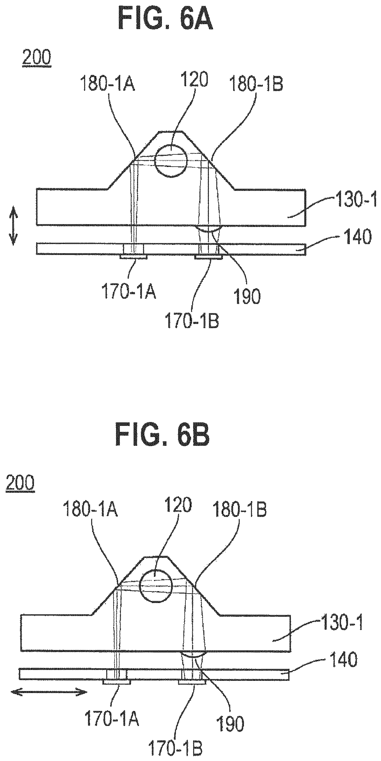

Next, improvements of the robustnesses of the specimen testing apparatus 100 and liquid level detection sensor 200 of the embodiment will be described. Figs. 6A and 6B are diagrams of improvements of the robustnesses of the specimen testing apparatus 100 and liquid level detection sensor 200 of the embodiment.

In the light path member 130-1, as described above, the first surface 180-1A, the flow path 120, and the second surface 180-1B are integrally formed. Therefore, the positional errors among the first surface 180-1A, the flow path 120, and the second surface 180-1B depend on the errors in design and production of the light path member 130-1. The errors in design and production are so minute that they are negligible, and therefore irrelevant to the assembly error.

Moreover, also the condensing lens 190 is formed integrally on the light path member 130-1. Therefore, also the positional error between the second surface 180-1B and the condensing lens 190 depends on errors in design and production. The errors in design and production are so minute that they are negligible, and therefore irrelevant to the assembly error.

Furthermore, the light emitter 170-1A and the light detector 170-1B are placed on the same board 140. Therefore, the positional error between the light emitter 170-1A and the light detector 170-1B depends on errors in design and production of the board 140. The errors in design and production are so minute that they are negligible, and therefore irrelevant to the assembly error.

In the process of producing the specimen testing apparatus 100 and the liquid level detection sensor 200, the board 140 is attached to the housing 110 (see Figs. 1 and 2). The assembly error is caused only in the process. The assembly error is considered to include a relative positional error which, as illustrated in Fig. 6A, is caused between the light path member 130-1 and the board 14 in the vertical direction in the figure, and that which, as illustrated in Fig. 6B, is caused between the light path member 130-1 and the board 14 in the lateral direction in the figure. Also a composite positional error which is directed in the vertical and lateral directions in the figure may be caused. In order to avoid complicated description, only simple positional errors in the vertical and lateral directions will be considered.

As illustrated in Figs. 1 and 2, the board 140 is attached to the housing 110 by using the screws. It is assumed that, in the attachment, the light emitter 170-1A and the light detector 170-1B are attached to the light path member 130-1 while being vertically deviated by about 1 mm as illustrated in Fig. 6A.

In this case, the distance between the light emitter 170-1A and the first surface 180-1A of the light path member 130-1, and that between the second surface 180-1B of the light path member 130-1 and the light detector 170-1B are changed. In the light path connecting the light emitter 170-1A, the first surface 180-1A, the second surface 180-1B, and the light detector 170-1B, however, a change which is so large that the mount of light received by the light detector 170-1B is largely changed does not occur.

Next, it is assumed that the light emitter 170-1A and the light detector 170-1B are attached to the light path member 130-1 while being laterally deviated by about 1 mm as illustrated in Fig. 6B.

In this case, the light path connecting the light emitter 170-1A, the first surface 180-1A, the second surface 180-1B, and the light detector 170-1B laterally translates by the distance corresponding to the amount of the displacement between the board 140 and the light path member 130-1. However, the light beam which is transmitted through the flow path 120 is the light beam which is reflected by the first surface 180-1A. Unless the deviation is considerably large, therefore, a change which is so large that the mount of light received by the light detector 170-1B is largely changed does not occur.

In the case where the board 140 is attached to the housing 110 by using the screws 160A to 160D, screw positioning holes 165A to 165D may be disposed in the board 140. As illustrated in Fig. 2, the screw positioning holes 165A to 165D are formed in adjacent to the light emitters 170-1A, 170-2A and light detectors 170-1B, 170-2B of the board 140, respectively. Specifically, the positioning hole 165A, the light emitter 170-1A, the light detector 170-1B, and the positioning hole 165C are formed so as to be on a linear line, and the positioning hole 165B, the light emitter 170-2A, the light detector 170-2B, and the positioning hole 165D are formed so as to be on a linear line. According to the configuration, it is possible to, during a process of attaching the board 140 to the housing 110, prevent large deviation from occurring.

As described above, it can be said that, in the specimen testing apparatus 100 and liquid level detection sensor 200 of the embodiment, it is determined whether there is a liquid or not, depending on the difference between the central light beam and peripheral light beam which are received by the light detector 170-1B. Therefore, it is possible to provide a specimen testing apparatus and liquid level detection sensor in which the robustness is remarkably improved, which are hardly affected by a bubble or meniscus in a flow path, which are easily assembled, and which have a high productivity.

The term "board" used herein means a board on which an electronic apparatus or semiconductor can be mounted. The board may be a circuit board, a print circuit board, a print wire board or a substrate.

The optical lens may be a condensing lens, a collimate lens, a biconic lens, a toric lens, or an irregular lens.

### [Reference Signs List]

100 specimen testing apparatus,
110 housing,
120 flow path,
130-1, 130-2 light path member,
140 board,
150A to 150D attachment hole,
160A to 160D screw,
165A to 165D positioning hole,
170-1A, 170-2A light emitter,
170-1B, 170-2B light detector,
175 optical axis of light beam reflected by first surface,
180-1A, 180-2A first surface,
180-1B, 180-2B second surface,
190 condensing lens,
195 center axis of flow path,
200 liquid level detection sensor.

## Claims

1. A liquid level detection sensor (200) comprising:
a light emitter (170-1A) that emits a light beam;
a first surface (180-1A) that reflects the light beam emitted from the light emitter (170-1A);
a second surface (180-1B) that reflects the light beam which is reflected by the first surface (180-1A), and which is transmitted through a flow path (120) allowing a liquid to pass therethrough; and
a light detector (170-1B) that receives the light beam that is reflected by the second surface (180-1B),
wherein an optical lens (190) which condenses the light beam reflected by the second surface (180-1B) onto the light detector (170-1B) is disposed between the second surface (180-1B) and the light detector (170-1B), and between a light path member (130-1) and a board (140),
wherein a space is provided between the light path member (130-1) and the board (140) such that light exiting the optical lens (190) passes through the space.

2. The liquid level detection sensor (200) according to claim 1, wherein
the light emitter (170-1A) and the light detector (170-1B) are placed on the same board (140), and
the first surface (180-1A) and the second surface (180-1B) are formed integrally in the same light path member (130-1).

3. The liquid level detection sensor (200) according to claim 1, wherein the optical lens (190) leads the light beam reflected by the second surface (180-1B) to the light detector (170-1B).

4. The liquid level detection sensor (200) according to claim 3, wherein the optical lens (190) is formed integrally on the light path member (130-1) in which the first surface (180-1A) and the second surface (180-1B) are formed, in particular wherein also the flow path (120) is formed in the light path member (130-1).

5. The liquid level detection sensor (200) according to claim 1, wherein the first surface (180-1A) and the second surface (180-1B) are disposed so as to oppose each other across the flow path (120).

6. A specimen testing apparatus (100) comprising:
the liquid level detection sensor (200) of any one of claims 1 to 5,
wherein the flow path (120) allows a liquid to pass through a light path of the light beam that is reflected by the first surface (180-1A),
wherein the flow path (120) is formed integrally in the light path member (130-1), and the board (140) is attached to a housing (110) in which the light path member (130-1) is formed.

7. The specimen testing apparatus (100) according to claim 6, wherein the flow path (120) is a tubular member which extends in a direction intersecting with a light path of the light beam that is reflected by the first surface (180-1A).

8. The specimen testing apparatus (100) according to claim 6, wherein a center axis of the flow path (120) intersects with an optical axis of the light beam which is reflected by the first surface (180-1A), or is located in a vicinity of the optical axis.

9. The specimen testing apparatus (100) according to claim 6, wherein a plurality of sets of the light emitter (170-1A; 170-2A), the first surface (180-1A; 180-2A), the second surface (180-1B; 180-2B), and the light detector (170-1B; 170-2B) are disposed at an interval in a longitudinal direction of the flow path (120).

## Patentansprüche

1. Flüssigkeitsstandserfassungssensor (200) umfassend:
einen Lichtemitter (170-1A), der einen Lichtstrahl emittiert;
eine erste Oberfläche (180-1A), die den vom Lichtemitter (170-1A) emittierten Lichtstrahl reflektiert;
eine zweite Oberfläche (180-1B), die den Lichtstrahl reflektiert, der von der ersten Oberfläche (180-1A) reflektiert wird und der durch einen Strömungsweg (120) übertragen wird, durch den eine Flüssigkeit treten kann; und
einen Lichtdetektor (170-1B), der den Lichtstrahl empfängt, der von der zweiten Oberfläche (180-1B) reflektiert wird,
wobei eine optische Linse (190), die den von der zweiten Oberfläche (180-1B) reflektierten Lichtstrahl auf den Lichtdetektor (170-1B) bündelt, zwischen der zweiten Oberfläche (180-1B) und dem Lichtdetektor (170-1B) und zwischen einem Lichtwegelement (130-1) und einer Platte (140) angeordnet ist,
wobei ein Raum zwischen dem Lichtwegelement (130-1) und der Platte (140) vorgesehen ist, so dass aus der optischen Linse (190) austretendes Licht durch den Raum hindurchtritt.

2. Flüssigkeitsstandserfassungssensor (200) nach Anspruch 1, wobei
der Lichtemitter (170-1A) und der Lichtdetektor (170-1B) auf der gleichen Platte (140) angeordnet sind, und
die erste Oberfläche (180-1A) und die zweite Oberfläche (180-1B) integral in demselben Lichtwegelement (130-1) ausgebildet sind.

3. Flüssigkeitsstandserfassungssensor (200) nach Anspruch 1, wobei die optische Linse (190) den von der zweiten Oberfläche (180-1B) reflektierten Lichtstrahl zu dem Lichtdetektor (170-1B) leitet.

4. Flüssigkeitsstandserfassungssensor (200) nach Anspruch 3, wobei die optische Linse (190) integral an dem Lichtwegelement (130-1) ausgebildet ist, in dem die erste Oberfläche (180-1A) und die zweite Oberfläche (180-1B) ausgebildet sind, insbesondere wobei auch der Strömungsweg (120) in dem Lichtwegelement (130-1) ausgebildet ist.

5. Flüssigkeitsstandserfassungssensor (200) nach Anspruch 1, wobei die erste Oberfläche (180-1A) und die zweite Oberfläche (180-1B) so angeordnet sind, dass sie sich quer zum Strömungsweg (120) gegenüberliegen.

6. Probenprüfvorrichtung (100) umfassend:
den Flüssigkeitsstandserfassungssensor (200) nach einem der Ansprüche 1 bis 5,
wobei der Strömungsweg (120) es einer Flüssigkeit ermöglicht, durch einen Lichtweg des Lichtstrahls zu gelangen, der von der ersten Oberfläche (180-1A) reflektiert wird,
wobei der Strömungsweg (120) integral in dem Lichtwegelement (130-1) ausgebildet ist und die Platte (140) an einem Gehäuse (110) befestigt ist, in dem das Lichtwegelement (130-1) ausgebildet ist.

7. Probenprüfvorrichtung (100) nach Anspruch 6, wobei der Strömungsweg (120) ein röhrenförmiges Element ist, das sich in einer Richtung erstreckt, die einen Lichtweg des Lichtstrahls schneidet, der von der ersten Oberfläche (180-1A) reflektiert wird.

8. Probenprüfvorrichtung (100) nach Anspruch 6, wobei eine Mittelachse des Strömungsweges (120) eine optische Achse des Lichtstrahls, der von der ersten Oberfläche (180-1A) reflektiert wird, schneidet oder sich in einer Nähe der optischen Achse befindet.

9. Probenprüfvorrichtung (100) nach Anspruch 6, wobei mehrere Sätze des Lichtemitters (170-1A; 170-2A), der ersten Oberfläche (180-1A; 180-2A), der zweiten Oberfläche (180-1B; 180-2B) und des Lichtdetektors (170-1B; 170-2B) in einem Abstand in einer Längsrichtung des Strömungsweges (120) angeordnet sind.

## Revendications

1. Capteur de détection de niveau de liquide (200), comprenant :
un émetteur de lumière (170A-1A) qui émet un faisceau de lumière ;
une première surface (180-1A) qui reflète le faisceau de lumière émis depuis l'émetteur de lumière (170-1A) ;
une deuxième surface (180-1B) qui reflète le faisceau de lumière qui est reflété par la première surface (180-1A), et qui est transmis à travers un trajet d'écoulement (120) permettant à un liquide de passer via celui-ci ; et
un détecteur de lumière (170-1B) qui reçoit le faisceau de lumière qui est reflété par la deuxième surface (180-1B),
dans lequel une lentille optique (190) qui condense le faisceau de lumière reflété par la deuxième surface (180-1B) sur le détecteur de lumière (170-1B) est disposée entre la deuxième surface (180-1B) et le détecteur de lumière (170-1B), et entre un élément de trajet de lumière (130-1) et une carte (140),
dans lequel un espace est disposé entre l'élément de trajet de lumière (130-1) et la carte (140) de sorte qu'une lumière quittant la lentille optique (190) traverse l'espace.

2. Le capteur de détection de niveau de liquide (200) selon la revendication 1, dans lequel
l'émetteur de lumière (170-1A) et le détecteur de lumière (170-1B) sont positionnés sur la même carte (140), et
la première surface (180-1A) et la deuxième surface (180-1B) sont constituées intégralement dans le même élément de trajet de lumière (130-1).

3. Le capteur de détection de niveau de liquide (200) selon la revendication 1, dans lequel la lentille optique (190) dirige le faisceau de lumière reflété par la deuxième surface (180-1B) vers le détecteur de lumière (170-1B).

4. Le capteur de détection de niveau de liquide (200) selon la revendication 3, dans lequel la lentille optique (190) est constituée intégralement sur l'élément de trajet de lumière (130-1) dans lequel la première surface (180-1A) et la deuxième surface (180-1B) sont constituées, en particulier dans lequel également le trajet d'écoulement (120) est constitué dans l'élément de trajet de lumière (130-1).

5. Le capteur de détection de niveau de liquide (200) selon la revendication 1, dans lequel la première surface (180- 1A) et la deuxième surface (180-1B) sont disposées de sorte à être opposées l'une à l'autre de part et d'autre du trajet d'écoulement (120).

6. Dispositif de test de spécimen (100) comprenant :
le capteur de détection de niveau de liquide (200) de l'une quelconque des revendications 1 à 5,
dans lequel le trajet d'écoulement (120) permet à un liquide de traverser un trajet de lumière du faisceau de lumière qui est reflété par la première surface (180-1A) ,
dans lequel le trajet d'écoulement (120) est constitué intégralement dans l'élément de trajet de lumière (130-1), et la carte (140) est fixée à un boîtier (110) dans lequel l'élément de trajet de lumière (130-1) est constitué.

7. Le dispositif de test de spécimen (100) selon la revendication 6, dans lequel le trajet d'écoulement (120) est un élément tubulaire qui s'étend dans une direction coupant un trajet de lumière du faisceau de lumière qui est reflété par la première surface (180-1A) .

8. Le dispositif de test de spécimen (100) selon la revendication 6, dans lequel un axe central du trajet d'écoulement (120) coupe un axe optique du faisceau de lumière qui est reflété par la première surface (180-1A), ou est situé aux alentours de l'axe optique.

9. L'appareil de test de spécimen (100) selon la revendication 6, dans lequel une pluralité d'ensembles de l'émetteur de lumière (170-1A ; 170-2A), de la première surface (180-1A ; 180-2A), de la deuxième surface (180-1B ; 180-2B) et du détecteur de lumière (170-1B ; 170-2B) sont disposés à un intervalle dans une direction longitudinale du trajet d'écoulement (120).
